Europäisches Patentamt

European Patent Office

Office européen des brevets

(19)

(11) Veröffentlichungsnummer: **0 158 985**
**B1**

(12) **EUROPÄISCHE PATENTSCHRIFT**

(45) Veröffentlichungstag der Patentschrift:
31.01.90

(21) Anmeldenummer: 85104443.8

(22) Anmeldetag: 12.04.85

(51) Int. Cl.⁴: **A 01 C 7/10,** A 01 C 15/00,
G 06 M 7/00

(54) Maschine zum Ausbringen von körnigem Material.

(30) Priorität: 14.04.84 DE 3414177

(43) Veröffentlichungstag der Anmeldung:
23.10.85 Patentblatt 85/43

(45) Bekanntmachung des Hinweises auf die Patenterteilung:
31.01.90 Patentblatt 90/5

(84) Benannte Vertragsstaaten:
AT BE CH DE FR GB IT LI LU NL SE

(56) Entgegenhaltungen:
EP-A- 0 094 583
WO-A-85/04547
FR-A- 2 414 860
NL-A- 7 107 475
US-A- 3 422 776
US-A- 3 677 437
US-A- 3 706 027
US-A- 4 057 709

(73) Patentinhaber: Amazonen-Werke H. Dreyer GmbH & Co.
KG, Postfach 51, D-4507 Hasbergen-Gaste (DE)

(72) Erfinder: Grosse-Scharmann, Franz, Dr., Waldstrasse 35,
D-2872 Hude I.O. (DE)
Erfinder: Gattermann, Bernd, Eichenweg 3, D-2872 Hude
I.O. (DE)
Erfinder: Gehrke, Rudolf, Lärchenweg 6,
D-2990 Papenburg 2 (DE)

(74) Vertreter: Patentanwälte Grünecker, Kinkeldey,
Stockmair & Partner, Maximilianstrasse 58,
D-8000 München 22 (DE)

## Beschreibung

Die Erfindung betrifft eine Maschine zum Ausbringen von körnigem Material, insbesondere Saatgut, Dünngemittel etc. entsprechend den Merkmalen, wie sie im Oberbegriff der Patentansprüche 1, 4 und 6 angegeben sind.

Aus der US-A-3 422 776 ist eine derartige Maschine bereits bekannt. Sie ist unterhalb des Dosierorgans mit einer Sensorplatte ausgerüstet, auf die die dosierten Körner fallen. Beim Auftreffen der Körner auf die Sensorplatte wird diese ausgelenkt und hierdurch ein Impuls erzeugt, der einer Auswerteschaltung zugeführt wird. Nachteilig bei dieser bekannten Maschine ist es, daß nur ausreichend große und schwere Körner in der Lage sind, die Sensorplatte so zu betätigen, daß ein eindeutiges Signal entsteht.

Aus der US-A-4 057 709 ist eine Sämaschine mit Zähleinrichtung für den Saatgutstrom und der Möglichkeit der pneumatischen Förderung des Saatgutes bekannt. Bei dieser bekannten Vorrichtung wird das Geräusch des vorbeiströmenden Saatgutstroms aufgenommen.

Aus der FR-A-2 414 860 ist eine Sämaschine bzw. ein Düngerstreuer pneumatischen Typs mit einer Dosiereinrichtung und horizontal verlaufenden Ausbringrohren bekannt. An den seitlichen Enden der Ausbringrohre sind nach unten weisende Krümmer angebracht, an deren Außenseiten Mikrophone vorgesehen sind. Die Mikrophone erfassen die Lautstärke des vorbeiströmenden Materialstroms, wobei dann von der Lautstärke auf die ausgestreute Menge geschlossen wird.

Die WO-A-8 504 547, die als Stand der Technik im Sinne von Art. 54(3) zu berücksichtigen ist, beschreibt eine Sämaschine mit Dosiervorrichtung und einer Beschleunigungseinrichtung vor einer Zähleinrichtung. Die Zähleinrichtung besteht aus einer Lichtschranke, die in einem Rohreinsatz untergebracht ist, der einen Innendurchmesser, kaum größer als die zu zählenden Körner, aufweist. Zweck, der als Gebläse ausgebildeten Beschleunigungsvorrichtung, ist das Vereinzeln der Körner, um zu verhindern, daß zwei Körner gleichzeitig ins Zählwerk gelangen und dieses verstopfen.

Der Erfindung liegt die Aufgabe zugrunde, die Erfassung der vom Dosierorgan abgegebenen Materialmenge bzw. der Anzahl der Materialkörner durch den Sensor bei einer gattungsgemäßen Vorrichtung, wie sie im Oberbegriff der Ansprüche 1, 4 und 6 angegeben ist, zu verbessern.

Diese Aufgabe wird mit Maschinen gelöst, die Merkmale des kennzeichnenden Teils der Ansprüche 1 oder 4 oder 6 aufweisen.

Allen diesen Lösungen ist gemeinsam, daß mit einer Beschleunigungsvorrichtung, die unabhängig von der Erdbeschleunigung ist, Materialkörner gegen die Prallplatte eines Sensors beschleunigt werden, was einen definierten Aufprall eines Korns auf die Sensorplatte bewirkt. Durch diese Beschleunigung, die wesentlich stärker als die Erdbeschleunigung ist, treffen die Körner mit einer derartigen Geschwindigkeit bzw. Energie auf den Sensor auf, daß ein für eine Auswertung ausreichend starkes Signal erzeugt wird. Somit können auch zeitlich dicht hintereinander bzw. mehrere zeitlich gleichzeitig auf den Sensor auftreffende Körner erfaßt werden. Die Körner erhalten aufgrund ihrer Beschleunigung in Richtung zur Prallplatte des Prallsensors eine definierte Bewegung, so daß das jeweils durch Aufprall erzeugte Signal analysiert werden kann. Weiterhin werden durch die Beschleunigung der Körner auf den Prallsensor einwirkende Umweltsignale unterdrückt. Ein zusätzlicher Vorteil ergibt sich daraus, daß die Anordnung der Beschleunigungsvorrichtungen, wie sie in den unabhängigen Ansprüchen angegeben sind, jeweils konstruktiv einfache Maßnahmen darstellen, die beispielsweise im Vergleich zu einem zwecks Aufgabenlösung weiterentwickelten Prallsensor bedeutend einfacher sind.

Bei einer im Anspruch 1 angegebenen ersten unabhängigen Lösung ist die Beschleunigungsvorrichtung ein Gebläse mit einer Schleuse. Hierdurch ist es möglich, mit geringstem konstruktivem und baulichem Aufwand die Beschleunigungsvorrichtung selbst auf engstem Raum auch nachträglich in serienmäßig produzierten Maschinen einzubauen. Bei einer anderen Lösung gemäß dem Anspruch 4 ist vorgesehen, als Beschleunigungsvorrichtung ein Förderband einzusetzen. Diese Art der Beschleunigungsvorrichtung eignet sich vor allem für körnige Materialien, die mit staubförmigen Mitteln beschichtet sind. Schließlich wird bei einer weiteren unabhängigen Lösung gemäß den Merkmalen des Anspruchs 6 eine rotierende Schleuderscheibe zur Beschleunigung eingesetzt.

Vorteilhafte Ausgestaltungen der Erfindung sind in den abhängigen Ansprüchen angegeben.

Die Beschleunigungsvorrichtung ist im wesentlichen so ausgelegt, daß sie in verschiedenen Lagen eingebaut werden kann. Hierbei kann zur Erzielung einer besonders niedrigen Bauweise der Beschleunigungsvorrichtung deren Beschleunigungsstrecke zumindest annähernd horizontal ausgerichtet sein. Eine solche Beschleunigungsvorrichtung kann auch für Drillmaschinen mit geringem Abstand zwischen Dosierorgan und Säschar, dessen Bewegungsfreiheit nicht eingeschränkt werden darf, ohne weiteres eingesetzt werden.

Bei der Anordnung der Prallsensoren wird durch die Wahl der Prallwinkel bezüglich der Beschleunigungsrichtung bei der Erfindung darauf geachtet, daß die in Richtung zum Prallsensor beschleunigten Körner nicht von dem bereits auf den Sensor aufgeprallten Körnern behindert werden.

Als besonders vorteilhaft hat sich hier vor allem bei horizontaler Beschleunigungsrichtung ein Winkel in der Größenordnung von 45° bis 70° zur Beschleunigungsrichtung herausgestellt.

Bei Beschleunigungsvorrichtungen, die mit Luft zur Beschleunigung der Körner arbeiten, kann gemäß einer Weiterbildung der Erfindung der Prallsensor auf einer Sensorplatte angeordnet sein, in der zumindest außerhalb des Aufprallbereichs der Körner Löcher ausgebildet sind.

Hierdurch wird erreicht, daß die die Körner beschleunigende Luft durch die Löcher entweichen und somit das Auftreffen der Körner auf die Sensorplatte nicht verfälschen kann. Das Entweichen der Luft kann auch dadurch sichergestellt werden, daß seitlich der Sensorplatte wenigstens ein offener Spalt angeordnet ist. Durch diese Maßnahme wird zumindest sichergestellt, daß sich keine Luftwirbel bilden, die die Beschleunigung der Körner behindern bzw. deren Auftreffen auf die Sensorplatte beeinträchtigen könnten.

Weitere Einzelheiten der Erfindung sind den Unteransprüchen, und der nachstehenden Beschreibung einiger Ausführungsbeispiele der Erfindung unter Bezugnahme auf die Zeichnung zu entnehmen. Es zeigen

Fig. 1 eine Seitenansicht in Prinzipdarstellung einer Drillmaschine mit einer Beschleunigungsvorrichtung gemäß einem ersten Ausführungsbeispiel der Erfindung,

Fig. 2 eine Seitenansicht in Prinzipdarstellung einer Beschleunigungsvorrichtung gemäß einem zweiten Ausführungsbeispiel der Erfindung,

Fig. 3 eine Seitenansicht in Prinzipdarstellung einer Beschleunigungsvorrichtung gemäß einem dritten Ausführungsbeispiel der Erfindung,

Fig. 4 eine Seitenansicht in Prinzipdarstellung einer Beschleunigungsvorrichtung gemäß einem vierten Ausführungsbeispiel der Erfindung,

Fig. 5 die Beschleunigungsvorrichtung gemäß Fig. 4 im Schnitt entlang der Linie V–V, und

Fig. 6 eine Sensorplatte mit Sensor.

Ein Vorratsbehälter 1 einer Drillmaschine weist in seinem unteren Bereich Auslauföffnungen 2 auf, oberhalb derer Dosiergehäuse 3 mit darin befindlichen, als Nockenräder ausgebildeten Dosierorganen 4 angeordnet sind.

Die auf einer Dosierwelle 5 drehfest angeordneten Nockenräder 4 sind über ein stufenlos einstellbares Regelgetriebe 6 und einen Kettentrieb 7 von einer nicht dargestellten Kraftwelle angetrieben. Unterhalb des Dosiergehäuses 3 ist eine Beschleunigungsvorrichtung 8 angeordnet. Diese besteht aus einem von einer nicht dargestellten Kraftquelle angetriebenen Gebläse 9, einer Injektorschleuse 10 mit einem Einlauftrichter 11 und einer als Rohr 12 ausgebildeten Beschleunigungsstrecke 13. Am Ende der Beschleunigungsstrecke 13 ist eine Sensorplatte 14 mit einem Sensor 15 unter einem Winkel α zur Beschleunigungsrichtung 16 der Beschleunigungsstrecke 13 angebracht. Der Winkel α weist etwa eine Größe von 45° auf. Unterhalb der Sensorplatte 14 befindet sich eine Öffnung 17 mit einem Auslauf 18, an den sich ein Trichter 19 eines zum Säschar 21 führenden Särohres 20 anschließt. Da alle Dosierorgane 4 gleich ausgebildet sind und von der gleichen Dosierwelle 5 angetrieben werden, ist es ausreichend, wenn nur unterhalb eines Dosierorganes 4 die Beschleunigungsvorrichtung 8 mit dem Sensor 15 angeordnet ist. Seitlich der Sensorplatte 14 befindet sich ein Luftauslaßschlitz S, damit die vom Gebläse 9 geförderte Luft entweichen kann.

Die Funktion der Beschleunigungsvorrichtung 8 ist wie folgt: Die im Vorratsbehälter 1 befindlichen Saatkörner 22 werden in einstellbaren Mengen bzw. Anzahl pro zurückgelegter Wegstrecke der Drillmaschine von den jeweiligen Dosierorganen 4 den Säscharen 21 zugeführt und somit in den Boden abgelegt. Das Dosierorgan 4, unter welchem die Beschleunigungsvorrichtung 8 angeordnet ist, führt die dosierten Saatkörner 22 über den Einlauftrichter 11 der Injektorschleuse 10 zu. In letzterer werden die Saatkörner 22 von dem vom Gebläse 9 erzeugten Luftstrom erfaßt und in Richtung zum Sensor 15 im Bereich der Beschleunigungsstrecke 13 relativ stark beschleunigt. Die beschleunigten Saatkörner 22 treffen dann mit einer relativ großen Bewegungsenergie auf die Sensorplatte 14 auf. Durch das Auftreffen der Saatkörner 22 auf die Sensorplatte 14 werden Impulse, Signale oder Schwingungen erzeugt, die vom Sensor 15 aufgenommen werden. Nach dem Auftreffen auf die Sensorplatte 14 werden die Saatkörner 22 aufgrund des Anstellwinkels α der Sensorplatte 14 zur Beschleunigungsrichtung 16 der Saatkörner 22 nach unten in Richtung zum Trichter 19 des Saatrohres 20 abgelenkt. Von hier aus fallen die Saatkörner 22 sodann im freien Fall über das Säschar 21 in die von diesem erzeugte Säfurche.

Die vom Sensor 15 aufgefangenen Impulse, Signale oder Schwingungen werden über eine Leitung 23 einem Mikroprozessor 24 zugeleitet. An diesen ist eine Wegstreckenmeßeinrichtung 25 angeschlossen. Diese ermittelt den von der Sämaschine zurückgelegten Weg. Die ermittelten Wegstreckenwerte werden ebenfalls dem Mikroprozessor 24 zugeleitet. Aus diesen Werten berechnet der Mikroprozessor 24 dann die tatsächlich ausgebrachte Anzahl von Saatkörnern 22, die das Dosierorgan 4 dem Säschar 21 zugeleitet hat. Diese ermittelte Anzahl tatsächlich ausgebrachter Saatkörner wird dann im Mikroprozessor 24 mit dem in diesen eingegebenen Sollwert verglichen. Wenn der ermittelte Istwert vom Sollwert abweicht, gibt der Mikroprozessor entsprechende Signale an einen Stellmotor 26, der dann einen Stellhebel 27 des Regelgetriebes 6 entsprechend verstellt, damit das Dosierorgan 4 die dem Sollwert entsprechende Anzahl Saatkörner pro zurückgelegter Wegstrecke dosiert. Dieser Regelvorgang wird kontinuierlich wiederholt.

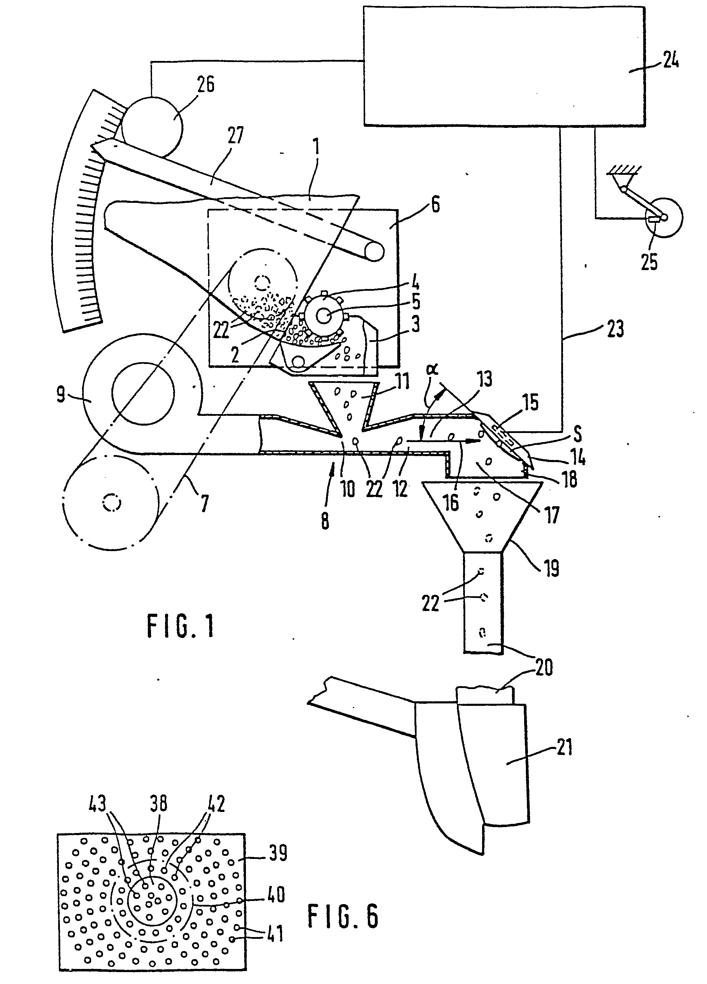

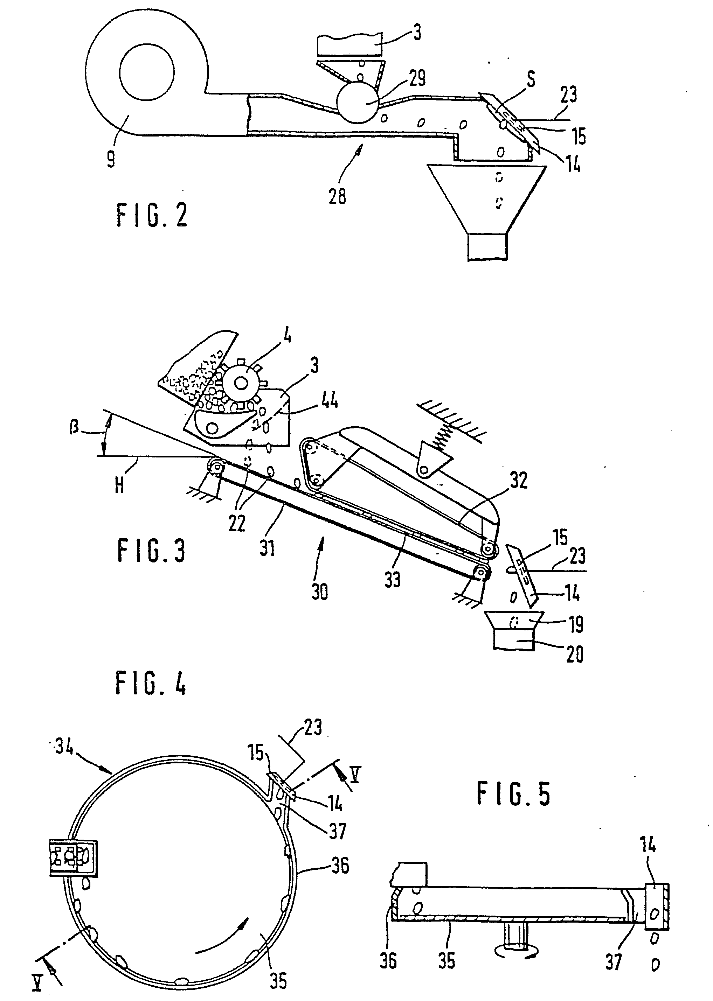

Die Beschleunigungsvorrichtung 28 gemäß Fig. 2 unterscheidet sich von der Beschleunigungsvorrichtung 8 gemäß Fig. 1 nur durch die andere Ausbildung der Schleuse. Die Schleuse dieser Beschleunigungsvorrichtung 28 ist als Zellenradschleuse 29 ausgeführt. Die Funktionsweise der Beschleunigungsvorrichtung 28 entspricht derjenigen der Beschleunigungsvorrichtung 8.

Die Beschleunigungsvorrichtung 30 gemäß Fig. 3 ist ebenfalls an eine Drillmaschine unterhalb eines Dosierorgans 4 angeordnet und als zwei aufeinanderliegende Förderbänder 31 und 32 ausgebildet. Das untere Förderband 31 erstreckt sich von der Vorderseite des Dosierorgans 4 bis zum Trichter 19 des Särohres 20, während sich das obere Förderband 32 von der Rückseite des Dosierorgans 4 bis zum Trichter 19 des Särohres 20 erstreckt. Das obere Förderband 32 wird federnd gegen das untere Förderband 31 gedrückt, so daß die jeweiligen Fördertrums aufeinanderliegen. Die Förderbänder 31 und 32 werden mit relativ großer Geschwindigkeit angetrieben, damit sie die von den Dosierorganen 4 dosierten Saatkörner 22 nach dem Erfassen durch die aufeinanderliegenden Fördertrums der Förderbänder 31 und 32 in Richtung des Sensors 15 beschleunigen. Die beschleunigten Saatkörner 22 werden mit großer Bewegungsenergie gegen die Sensorplatte 14 geworfen, von wo aus sie dann in Richtung des Trichters 19 abgelenkt werden. Anschließend werden diese Saatkörner mit Hilfe eines Säschares in den Boden abgelegt. Die Beschleunigungsstrecke 33, die von den Förderbändern 31 und 32 gebildet wird, ist unter einem Winkel β, der im Bereich zwischen 0° und 45° zur Horizontalen H liegt, an der Drillmaschine angeordnet.

Die Funktionsweise der Beschleunigungsvorrichtung 30 hinsichtlich der Auswertung der von dem Sensor empfangenen Saatkörner-Auftreffimpulse und die Regelung der von dem Dosierorgan 4 ausgebrachten Menge entspricht der Funktionsweise der Beschleunigungsvorrichtung 8 gemäß Fig. 1.

Im Ausführungsbeispiel gemäß Fig. 3 ist im Dosiergehäuse 3 eine mit gestrichelten Linien eingezeichnete Verzögerungsplatte 44 angeordnet, die den halben Querschnitt des Dosiergehäuses 3 teilweise abdeckt. Durch die Verzögerungsplatte 44 werden Saatkörner 22, die in Häufchen von dem Dosierorgan 4 abfallen, zumindest etwas vereinzelt, da die auf die Verzögerungsplatten 44 fallenden Saatkörner 22 einen etwas längeren Weg als die nicht auf die Verzögerungsplatten 44 fallenden Saatkörner zurücklegen müssen.

Die Beschleunigungsvorrichtung 34 gemäß den Fig. 4 und 5 weist eine rotierende Schleuderscheibe 35 auf, die von einer nicht dargestellten Kraftquelle angetrieben wird. Die Schleuderscheibe 35 ist in einem feststehenden Ring 36 angeordnet. Dieser weist im Bereich des Sensors 15 eine in Richtung zum Sensor 15 weisende Öffnung 37 auf. Die vom Dosierorgan 4 dosierten Saatkörner 22 fallen auf die Schleuderscheibe 35 und werden von dieser beschleunigt, so daß die Saatkörner durch die Öffnung 37 in Richtung des Sensors 15 geschleudert werden. Die Saatkörner 22 treffen mit einer großen Bewegungsenergie auf die Sensorplatte 14 auf. Das dabei erzeugte Signal wird, wie oben beschrieben, einem Mikroprozessor zugeleitet, der entsprechend dem Ausführungsbeispiel gemäß Fig. 1 die Ausbringmenge so regelt, daß die Sollanzahl von Saatkörnern ausgebracht wird.

Der Sensor 38 gemäß Fig. 6 ist auf einer Sensorplatte 39 angebracht. Außerhalb des strickpunktiert gezeichneten Aufprallbereichs 40 der Saatkörner auf der Sensorplatte 39 sind in derselben Löcher 41, gleichmäßig um den Sensor 38 verteilt, ausgebildet. Durch diese Löcher 41 kann die vom Gebläse geförderte Luft entweichen, so daß sich vor der Sensorplatte 39 keine Luftwirbel bilden können. Um die Luftabführung noch weiter zu verbessern, sind auch innerhalb des Aufprallbereichs 40 noch Löcher 42 angeordnet. Eine noch bessere Luftabführung wird durch zusätzliche Anordnung von Löchern 43 im Sensor 38 selbst erreicht. Die Löcher 41, 42 und 43 können sowohl parallel zueinander wie auch in unterschiedlichen Winkeln zueinander in der Sensorplatte 39 ausgebildet sein, so daß die Luft optimal abgeführt werden kann.

**Patentansprüche**

1. Maschine zum Ausbringen von körnigem Material, insbesondere Saatgut, Düngemitteln etc., mit einem Vorratsbehälter (1) und einem oder mehreren Dosierorganen (4), von dem bzw. von denen aus das Material in einstellbaren Mengen dem Boden zugeführt wird, wobei im Bereich zumindest eines Dosierorgans (4) ein Prallsensor (15, 38) mit einer Prallplatte zur Erfassung der von diesem Dosierorgan (4) ausgebrachten Materialmenge bzw. der Anzahl von ausgebrachten Körnern des Materials angeordnet ist, und daß in Strömungsrichtung der Materialmenge vor dem Prallsensor (15, 38) eine Beschleunigungsvorrichtung (8, 28, 30, 34) angeordnet ist, so daß die Materialmenge bzw. die Körner beschleunigt auf die in einem Winkel von kleiner als 90° und größer als 0° zur Beschleunigungsrichtung (16) angeordnete Prallplatte des Prallsensors (15, 38) auftreffen und von ihr aus der Beschleunigungsrichtung (16) abgelenkt werden, dadurch gekennzeichnet, daß als Beschleunigungsvorrichtung (8, 28) ein Luftstrom erzeugendes Gebläse (9) mit einer Schleuse (10, 29) vorgesehen ist, so daß die Materialkörner durch den Luftstrom beschleunigt werden, und daß im Bereich des Sensors wenigstens eine Luftdurchtrittsöffnung angeordnet ist, durch welche die die Materialkörner beschleunigende Luft entweichen kann.

2. Maschine nach Anspruch 1, dadurch gekennzeichnet, daß die Schleuse eine Injektorschleuse (10) ist.

3. Maschine nach Anspruch 1, dadurch gekennzeichnet, daß die Schleuse eine Zellenradschleuse (29) ist.

4. Maschine zum Anbringen von körnigem Material, insbesondere Saatgut, Düngemitteln etc., mit einem Vorratsbehälter (1) und einem oder mehreren Dosierorganen (4), von dem bzw. von denen aus das Material in einstellbaren Mengen dem Boden zugeführt wird, wobei im Bereich zumindest eines Dosierorgans (4) ein Prallsensor (15, 38) mit einer Prallplatte zur Erfassung der von diesem Dosierorgan (4) ausgebrachten Materialmenge bzw. der Anzahl von ausgebrachten Körnern des Materials angeordnet ist, und daß in Strömungsrichtung der Materialmenge vor dem Prallsensor (15, 38) eine Beschleunigungsvorrichtung (8, 28, 30, 34) angeordnet ist, so daß die Materialmenge bzw. die Körner beschleunigt auf die in einem Winkel von kleiner als 90° und größer als 0° zur Beschleunigungsrichtung (16) angeordnete Prallplatte des Prallsensors (15, 38) auftreffen und von ihr aus der Beschleunigungsrichtung (16) abgelenkt werden, dadurch gekennzeichnet, daß als Beschleunigungsvorrichtung (30) ein Förderband (31) vorgesehen ist.

5. Maschine nach Anspruch 4, dadurch gekennzeichnet, daß die Beschleunigungsvorrichtung (30) zwei übereinander angeordnete Förderbänder (31, 32) aufweist, deren einander zugewandte Fördertrums aufeinanderliegen.

6. Maschine zum Ausbringen von körnigem Material, insbesondere Saatgut, Düngemitteln etc., mit einem Vorratsbehälter (1) und einem oder mehreren Dosierorganen (4), von dem bzw. von denen aus das Material in einstellbaren Mengen dem Boden zugeführt wird, wobei im Bereich zumindest eines Dosierorgans (4) ein Prallsensor (15, 38) mit einer Prallplatte zur Erfassung der von diesem Dosierorgan (4) ausgebrachten Materialmenge bzw. der Anzahl von ausgebrachten Körnern des Materials angeordnet ist, und daß in Strömungsrichtung der Materialmenge vor dem Prallsensor (15, 38) eine Beschleunigungsvorrichtung (8, 28, 30, 34) angeordnet ist, so daß die Materialmenge bzw. die Körner beschleunigt auf die in einem Winkel von kleiner als 90° und größer als 0° zur Beschleunigungsrichtung (16) angeordnete Prallplatte des Prallsensors (15, 38) auftreffen und von ihr aus der Beschleunigungsrichtung (16) abgelenkt werden, dadurch gekennzeichnet, daß als Beschleunigungsvorrichtung (34) eine rotierende Schleuderscheibe (35) vorgesehen ist.

7. Maschine nach Anspruch 6, dadurch gekennzeichnet, daß die Schleuderscheibe (35) in einem Ring (36) angeordnet ist, der im Bereich des Sensors (15) in Richtung zum Sensor (15) eine Öffnung (37) aufweist.

8. Maschine nach wenigstens einem der Ansprüche 1 bis 7, dadurch gekennzeichnet, daß die Beschleunigungsstrecke (13) der Beschleunigungsvorrichtung (8) zumindest annähernd horizontal ausgerichtet ist.

9. Maschine nach wenigstens einem der Ansprüche 1 bis 8, dadurch gekennzeichnet, daß die Beschleunigungsstrecke (35) der Beschleunigungsvorrichtung (30) unter einem Winkel (β) angeordnet ist, der im Bereich zwischen 0° und 45° zur Horizontalen (H) liegt.

10. Maschine nach mindestens einem der Ansprüche 1 bis 9, dadurch gekennzeichnet, daß die Prallplatte des Prallsensors (15, 38) in bezug auf die Beschleunigungsrichtung (16) der Beschleunigungsvorrichtung verstellbar angeordnet ist.

11. Maschine nach mindestens einem der Ansprüche 1 bis 10, dadurch gekennzeichnet, daß der Winkel (α) zwischen der Beschleunigungsrichtung (16) der Materialkörner und der Prallplatte des Prallsensors (15, 38) 45° bis 70° groß ist.

12. Maschine nach mindestens einem der Ansprüche 1 bis 11, dadurch gekennzeichnet, daß der Prallsensor (38) auf einer Sensorplatte (39) angeordnet ist, in der zumindest außerhalb des Aufprallbereichs (40) der Körner Löcher (41, 42, 53) ausgebildet sind.

13. Maschine nach Anspruch 12, dadurch gekennzeichnet, daß die Löcher (41, 42) um den Prallsensor (38) verteilt angeordnet sind.

14. Maschine nach Anspruch 12 oder 13, dadurch gekennzeichnet, daß der Prallsensor (38) selbst Löcher (43) aufweist.

15. Maschine nach wenigstens einem der Ansprüche 1 bis 14, dadurch gekennzeichnet, daß seitlich der Sensorplatte (15) sich zumindest ein offener Spalt (S) befindet.

**Claims**

1. Machine for distributing granular material, more especially seeds, fertilisers, etc., including a hopper (1) and one or more metering means (4), from which the material is supplied to the ground in adjustable quantities, an impact sensor (15, 38) having a baffle plate for receiving the quantity of material discharged by this metering means (4), or respectively for receiving the number of discharged grains of the material, and being disposed in the region of at least one metering means (4), and an accelerator arrangement (8, 28, 30, 34) disposed upstream of the impact sensor (15, 38) in the direction of flow of the quantity of material, so that the quantity of material, or respectively the grains, impinge in an accelerated manner upon the baffle plate of the impact sensor (15, 38), said plate being disposed at an angle of less than 90° and greater than 0° relative to the direction of acceleration (16), and the quantity of material, or respectively the grains, are deflected by the baffle plate from the direction of acceleration (16), characterised in that a fan (9), which produces a flow of air, is provided as the accelerator arrangement (8, 28) and has a charging valve (sluice) (10, 29), so that the grains of material are accelerated by the flow of air, and in that at least one air flowthrough aperture is disposed in the region of the sensor, through which aperture the air accelerating the grains of material can pass.

2. Machine according to claim 1, characterised in that the charging valve is an injector charging valve (10).

3. Machine according to claim 1, characterised in that the charging valve is a bucket wheel charging valve (29).

4. Machine for distributing granular material, more especially seeds, fertilisers, etc., including a hopper (1) and one or more metering means (4) from which the material is supplied to the ground in adjustable quantities, an impact sensor (15, 38) having a baffle plate for receiving the quantity of material discharged by this metering means (4), or respectively for receiving the number of discharged grains of the material, and being disposed in the region of at least one metering means (4), and an accelerator arrangement (8, 28, 30, 34) disposed upstream of the impact sensor (15, 38) in the direction of flow of the quantity of material, so that the quantity of material, or respectively the grains, impinge in an accelerated manner upon the baffle plate of the impact sensor (15, 38), said plate being disposed at an angle of less than 90° and greater than 0° relative to the direction of acceleration (16), and the quantity of material, or respectively the grains, are deflected by the baffle plate from the direction of acceleration (16), characterised in that a conveyor belt (31) is provided as the accelerator arrangement (30).

5. Machine according to claim 4, characterised in that the accelerator arrangement (30) includes two conveyor belts (31, 32), which are disposed one above the other and the conveyor runs of which, facing each other, lie one above the other.

6. Machine for distributing granular material, more especially seeds, fertilisers, etc., including a hopper (1) and one or more metering means (4), from which the material is supplied to the ground in adjustable quantities, an impact sensor (15, 38) having a baffle plate for receiving the quantity of material discharged by this metering means (4), or respectively for receiving the number of discharged grains of the material, and being disposed in the region of at least one metering means (4), and an acceleration arrangement (8, 28, 30, 34) disposed upstream of the impact sensor (15, 38) in the direction of flow of the quantity of material, so that the quantity of material, or respectively the grains, impinge in an accelerated manner upon the baffle plate of the impact sensor (15, 38), said plate being disposed at an angle of less than 90° and greater than 0° relative to the direction of acceleration (16), and the quantity of material, or respectively the grains, are deflected by the baffle plate from the direction of acceleration (16), characterised in that a rotary centrifugal disc (35) is provided as the accelerator arrangement (34).

7. Machine according to claim 6, characterised in that the centrifugal disc (35) is disposed in a ring (36), which is provided with an aperture (37) in the region of the sensor (15), which aperture extends in the direction towards the sensor (15).

8. Machine according to at least one of claims 1 to 7, characterised in that the path of acceleration (13) of the accelerator arrangement (8) is orientated at least approximately horizontally.

9. Machine according to at least one of claims 1 to 8, characterised in that the path of acceleration (35) of the accelerator arrangement (30) is disposed at an angle (β) which lies in the range between 0° and 45° relative to the horizontal (H).

10. Machine according to at least one of claims 1 to 9, characterised in that the baffle plate of the impact sensor (15, 38) is disposed so as to be adjustable with respect to the direction of acceleration (16) of the accelerator arrangement.

11. Machine according to at least one of claims 1 to 10, characterised in that the angle (α) between the direction of acceleration (16) of the grains of material and the baffle plate of the impact sensor (15, 38) is between 45° and 70°.

12. Machine according to at least one of claims 1 to 11, characterised in that the impact sensor (38) is disposed on a sensor plate (39), which is provided with holes (41, 42, 43) at least externally of the region (40) upon which the grains impinge.

13. Machine according to claim 12, characterised in that the holes (41, 42) are distributed around the impact sensor (38).

14. Machine according to claim 12 or 13, characterised in that the impact sensor (38) itself has holes (43).

15. Machine according to at least one of claims 1 to 14, characterised in that at least one open slot (S) is situated laterally of the sensor plate (14).

**Revendications**

1. Machine pour distribuer des produits granuleux tels que des graines de semence, des granulés d'engrais etc, comportant une trémie (1) ainsi qu'un ou plusieurs organes de dosage (4) pour fournir au sol des quantités réglées de produits, et au niveau d'au moins un organe de dosage (4), il est prévu un capteur à rebondissement (15, 38) muni d'une plaque brise-jet pour détecter la quantité de produits fournie par cet organe de dosage (4) ou le nombre de grains de produits à distribuer, et en ce que dans la direction d'écoulement des produits, en amont du capteur à rebondissement (15, 38), il est prévu un dispositif d'accélération (8, 28, 30, 34) pour accélérer la quantité de produits (granulés ou grains) vers la plaque brise-jet du capteur (15, 38), dirigée par rapport à la direction d'accélération (16) suivant un angle inférieur à 90° et supérieur à 0°, pour être déviée à partir de là, de la direction d'accélération (16), machine caractérisée en ce que le dispositif d'accélération (8, 28) est constitué par une machine soufflante (9) créant un courant d'air, avec un sas (10, 29) pour accélérer les graines ou granulés par la veine d'air et en ce qu'au niveau du capteur, il est prévu au moins un orifice de passage d'air par lequel peut s'échapper l'air ayant accéléré les graines ou granulés.

2. Machine selon la revendication 1, caractérisée en ce que le sas est un sas d'injecteur (10).

3. Machine selon la revendication 1, caractérisée en ce que le sas est un sas à roues à alvéoles (29).

4. Machine pour distribuer des produits en grains ou granulés notamment des graines de semence, des granulés d'engrais etc. à l'aide d'une trémie (1) ainsi que d'un ou plusieurs organes de dosage (4) qui fournissent des quantités réglables de produits au sol, et au niveau d'au moins un organe de dosage (4), il est prévu un capteur à rebondissement (15, 38) muni d'une plaque brise-jet pour détecter la quantité de produits fournie par l'organe de dosage (4) ou le nombre de grains de produit fournis et en ce que dans la direction d'écoulement du produit, en amont du capteur à rebondissement (15, 38), il est prévu un dispositif d'accélération (8, 28, 30, 34) pour accélérer les produits en grains ou en granulés vers une plaque brise-jet du capteur à rebondissement (15, 38), plaque qui est disposée suivant un angle inférieur à 90° et supérieur à 0° par rapport à la direction d'accélération (16), pour être déviée par cette plaque hors de la direction d'accélération (16), machine caractérisée en ce que le dispositif d'accélération (30) est une bande-transporteuse (31).

5. Machine selon la revendication 4, caractérisée en ce que le dispositif d'accélération (30) se compose de deux bandes-transporteuses (31, 32) superposées, dont les brins de transfert sont tournés l'un vers l'autre.

6. Machine pour distribuer des produits en grains ou granulés notamment des graines de semence, des granulés d'engrais, etc, comportant une trémie (1) ainsi qu'un ou plusieurs organes de dosage (4) qui fournissent des quantités réglables de produits au sol, et au niveau d'au moins un organe de dosage (4), il est prévu un capteur à rebondissement (15, 38) muni d'une plaque brise-jet pour détecter la quantité de produits fournie par l'organe de dosage (4) ou le nombre de grains de produit fournis et en ce que dans la direction d'écoulement du produit, en amont du capteur à rebondissement (15, 38), il est prévu un dispositif d'accélération (8, 28, 30, 34) pour accélérer les produits en grains ou en granulés vers une plaque brise-jet du capteur à rebondissement (15, 38), plaque qui est disposée suivant un angle inférieur à 90° et supérieur à 0° par rapport à la direction d'accélération (16), pour être déviée par cette plaque hors de la direction d'accélération (16), machine caractérisée en ce que le dispositif d'accélération (34) est un disque d'accélération (35) rotatif.

7. Machine selon la revendication 6, caractérisée en ce qu'au disque d'accélération (35) est associé un anneau (36) qui comporte une ouverture (37) dans la zone du capteur (15) en direction du capteur (15).

8. Machine selon au moins l'une des revendications 1 à 7, caractérisée en ce que la trajectoire d'accélération (13) du dispositif d'accélération (8) est alignée au moins à peu près horizontalement.

9. Machine selon au moins l'une des revendications 1 à 8, caractérisée en ce que la trajectoire d'accélération (35) du dispositif d'accélération (30) est prévue suivant un angle (β) compris entre 0° et 45° par rapport à la direction horizontale (H).

10. Machine selon au moins l'une des revendications 1 à 9, caractérisée en ce que la plaque brise-jet du capteur à rebondissement (15, 30) est réglable par rapport à la direction d'accélération (16) du dispositif d'accélération.

11. Machine selon au moins l'une des revendications 1 à 10, caractérisée en ce que l'angle (α) entre la direction d'accélération (16) des grains ou granulés de produit et la plaque brise-jet du capteur à rebondissement (15, 38) est compris entre 45° et 70°.

12. Machine selon au moins l'une des revendications 1 à 11, caractérisée en ce que le capteur à rebondissement (38) est monté sur une plaque de capteur (39) et des trous (41, 42, 53) sont réalisés au moins à l'extérieur de la plage de rebondissement (40) des grains ou granulés.

13. Machine selon la revendication 12, caractérisée en ce que les trous (41, 42) sont répartis autour du capteur à rebondissement (38).

14. Machine selon l'une quelconque des revendications 12 ou 13, caractérisée en ce que le capteur à rebondissement (38) comporte lui-même des trous (43).

15. Machine selon au moins l'une des revendications 1 à 14, caractérisée par au moins un intervalle ouvert (S) latéralement par rapport à la plaque de capteur (15).

FIG. 1

FIG. 6

FIG.2

FIG.3

FIG.4

FIG.5